# EUROPEAN PATENT APPLICATION

(11) **EP 1 792 819 A1**
(43) Date of publication of application: **06.06.2007**
(21) Application number: 05026306.0
(22) Date of filing: 02.12.2005
(51) Int. Cl.: B62M 3/00

(54) **Bottom bracket assembly of a bicycle**

(71) Applicant: CAMPAGNOLO S.R.L., I-36100 Vicenza (IT)
(72) Inventor: Dal Pra', Guiseppe, 36100 Zané (Vicenza) (IT); Dettori, Paolo, 36100 Vicenza (VI) (IT)
(74) Representative: Checcacci, Giorgio

(57) **Abstract**

A bottom bracket assembly (1; 101) of a bicycle comprises two cranks (4, 6; 104, 106), an axle (2; 102) integral in rotation with the cranks and two bearings (8, 9) for the rotatable support of the assembly (1; 101) with respect to a box (16) of the frame of the bicycle; each of the bearings (8, 9) is arranged inside the thickness of one of the respective cranks (4, 6; 104, 106). In this way the weight of the cyclist acting on a crank (4, 6; 104, 106) transfers directly onto the corresponding bearing (8, 9), without any bending stress being generated on the axle (2; 102) of the bottom bracket.

## Description

The present invention refers to a bottom bracket assembly of a bicycle.

Normally, a bottom bracket assembly of a bicycle comprises two cranks, an axle integral in rotation with the cranks and two bearings for the rotatable support of the assembly with respect to a box of the bicycle frame.

In racing bicycles it is important to ensure the maximum lightness of every component as well as the maximum strength. The axle of the bottom bracket is subjected to substantial torsional stresses during pedalling, in particular when the cyclist is pushing on the left pedal, since the crown gears that drive the transmission chain are usually coupled with the right crank. Moreover, when the cyclist exerts his pedalling action standing up on the pedals, as often occurs in the most taxing climbs, the axle is also subjected to a substantial bending stress in its end zones, outside the bearings; indeed, the weight of the cyclist is borne by the cranks and is transferred therefrom onto the end portions of the axle.

The aforementioned bending stress can be of a magnitude such that the material of the axle - already subjected to torsional stress - reaches its structural strength limit, causing the axle to break. Even if the breaking limit is not reached, nevertheless, the bending stress can make the end zones of the axle deform to such an extent as to disturb the action of the cyclist or even to cause undesired interference between the moving parts and the fixed parts, for example the innermost crown and the frame.

US 5493937 shows a bottom bracket assembly in which the bearings are housed outside of the box of the bicycle frame through a pair of adapters. This provision allows the bearings to be brought closer to the cranks, thus shortening the arm of the lever that flexes the axle at the ends. However, the position of the bearings outside the frame means that the total length of the axle has to be increased; consequently, by the effect of the distance between the bearings, the axle tends to bend at the centre, and can even slide against the inside of the box of the frame.

The problem at the basis of the present invention is to eliminate or at least reduce the risk of the axle of the bottom bracket deforming by bending.

Consequently, in a first aspect thereof the present invention concerns a bottom bracket assembly according to claim 1, in a second aspect thereof concerns a method for assembling a bottom bracket assembly according to claims 11 or 12, in a third aspect thereof concerns a sub-assembly according to claims 15 or 16, in a fourth aspect thereof concerns an adapter support according to claim 19 and in a fifth aspect thereof concerns a crank according to claim 23. Preferred characteristics are shown in the dependent claims.

More specifically, the invention concerns in a first aspect thereof a bottom bracket assembly of a bicycle, comprising two cranks, an axle integral in rotation with the cranks and two bearings for the rotatable support of the assembly with respect to a box of the bicycle frame, characterised in that at least one of the bearings is arranged inside the thickness of one of the cranks.

In this way the weight of the cyclist acting on the crank transfers directly on the corresponding bearing, thus without any bending stress being generated on the axle of the bottom bracket; consequently, since there is no stress there is no bending deformation of the axle. Moreover, the housing of the bearing in the thickness of the crank allows the length of the axle to be reduced, with a consequent reduction both of the weight and of the torsional deformation of the axle itself, for the same power exerted by cyclist.

To take the bearing in such a way that it is inside the thickness of the crank it is possible to suitably shape the box of the frame. Preferably, however, at said crank an adapter support is provided fixed integrally and canti-levered to the box of the frame, in which the bearing is arranged between said crank and said adapter support. The use of an adapter support allows an assembly according to the invention to be mounted on any frame, even a pre-existing one.

Preferably, the bearing is mounted externally about said adapter support. This makes it possible to use both an axle and bearings of greater diameter than what would be allowed by a conventional assembly of the bearing in the box of the frame; the greater diameter of the bearings ensures less wear of the moving parts, whereas the greater diameter of the axle reduces the torsional deformation, for the same power exerted by the cyclist.

Preferably, said crank comprises a seat for receiving the bearing, with an inner cylindrical coupling surface with the bearing; in this way the coupling with an adapter support provided for the assembly of the bearing in an outer position is simplified.

The seat for receiving the bearing can be formed directly in the body of the crank; preferably, however, above all in the case of a crank made from non-metallic material, the receiving seat is formed in an insert, inserted integrally in a recess formed in the crank.

Preferably, the receiving seat and even more preferably the recess (if present) have a smaller depth than the thickness of the crank. This ensures that the crank maintains its greater structural rigidity.

In a bottom bracket assembly, it is also possible for just one of the bearings to be arranged inside the thickness of the respective crank, whereas the other bearing is housed conventionally. Preferably, however, both of the bearings are arranged inside the thickness of a respective one of the cranks.

The two adapter supports can be independent from each other; preferably, however, the two adapter supports extend inside the box of the frame until they couple with each other, for example and preferably since the two adapter supports comprise mutual coupling means.

In its second aspect, the invention can concern more specifically a method for assembling an assembly according to the first aspect of the invention, comprising the arrangement of a sub-assembly that includes one of the adapter supports and one of the bearings mounted on the adapter support.

Again in its second aspect, the invention can concern more specifically a method for assembling an assembly according to the first aspect of the invention, comprising the arrangement of a sub-assembly that includes one of the cranks and one of the bearings mounted in the crank. Preferably, such a sub-assembly also includes the axle, integrally coupled with the crank, and even more preferably also one of the adapter supports, mounted in the bearing.

In its third aspect, the invention can concern more specifically a sub-assembly for the assembly of an assembly according to the first aspect of the invention, including one of the adapter supports and one of the bearings mounted on the adapter support.

Again in its third aspect, the invention can concern more specifically a sub-assembly for the assembly of an assembly according to the first aspect of the invention, including one of the cranks and one of the bearings mounted in the crank. Preferably, such a sub-assembly also includes the axle, integrally coupled with the crank, and even more preferably also one of the adapter supports, mounted in the bearing.

In its fourth aspect, the invention concerns more specifically an adapter support suitable for being mounted on a box of the frame of a bicycle for the support of a bearing of a bottom bracket assembly, comprising a tubular body provided with an outer threading for the engagement with the box of the frame inside it and a receiving seat of the bearing, characterised in that the receiving seat of the bearing is an outer cylindrical seat.

Preferably, the adapter support comprises - on the opposite side to the receiving seat of the bearing - coupling means suitable for engaging the adapter support with another adapter support, mounted in the same bottom bracket assembly. In such a way, the assembly of the two adapter supports also acts as a spacer, i.e. it determines the distance in the axial sense between the two cranks.

Preferably, the adapter support comprises a shaped drive profile for the actuation of the adapter support through the box of the frame.

In its fifth aspect, the invention concerns more specifically a crank for a bottom bracket assembly of a bicycle, comprising in its own thickness a receiving seat of a bearing for the rotatable support of the assembly with respect to a box of the frame of the bicycle, said receiving seat having an inner cylindrical coupling surface with the bearing. Preferably, the receiving seat of the bearing is formed in an insert, inserted integrally in a recess formed in the crank. Preferably, moreover, the receiving seat comprises a bottom surface surrounded by an annular abutment surface, slightly raised with respect to the bottom surface; the outer ring of the bearing abuts against this annular surface, once it has been mounted in the crank.

Further characteristics and advantages of the invention shall become clearer from the following description of a bottom bracket assembly made with reference to the attached drawings, in which:
- figure 1 is a longitudinal section of a bottom bracket assembly according to the present invention;
- figures 2 to 6 show steps of a possible assembly sequence of the assembly of figure 1;
- figures 7A and 7B show a first adapter support according to the present invention;
- figures 8A and 8B show a second adapter support according to the present invention;
- figure 9 is a longitudinal section of a bottom bracket assembly according to an alternative embodiment of the present invention;
- figure 10 is a perspective view of the axle of the assembly of figure 9;
- figures 11A and 11B show an insert of the right crank of the assembly of figure 1; and
- figures 12A and 12B show an insert of the left crank of the assembly of figure 1;
- figure 13 shows a perspective view of a sub-assembly according to the invention, with a crank and a bearing mounted in it.

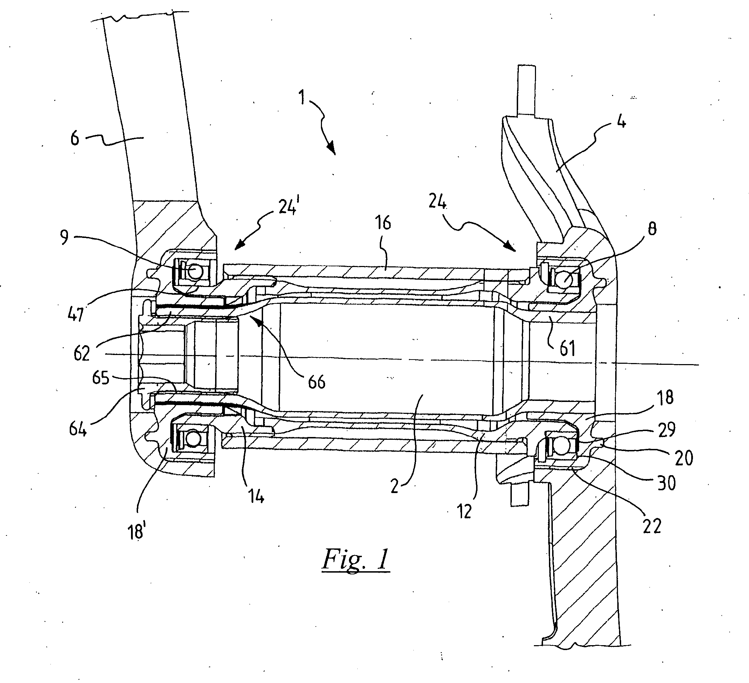

With reference to figure 1, a bottom bracket assembly 1 comprises an axle 2 coupled with a right crank 4 and with a left crank 6. The cranks 4 and 6 incorporate inside their own thickness respective bearings 8 and 9, respectively carried by a right adapter support 12 and by a left adapter support 14, screwed into a box 16 of a bicycle frame. The arrangement of the bearings 8 and 9 is such that the axle 2 is supported in the box 16 in a so-called indirect way, by means of the cranks 4 and 6.

The cranks are preferably made from a composite material that can comprise structural fibres incorporated in a polymeric material. Typically, the structural fibres are selected from the group consisting of: carbon fibres, glass fibres, aramidic fibres, ceramic fibres, boron fibres and combinations thereof, carbon fibres being preferred. The arrangement of said structural fibres in the polymeric material can be a random arrangement of small pieces or sheets of structural fibres, a substantially unidirectional ordered arrangement of fibres, a substantially two-directional ordered arrangement of fibres, or a combination of the above. Preferably, the polymeric material is thermosetting; however, this does not rule out the possibility of using a thermoplastic material.

Moreover, it is also possible for the cranks to be made from metallic material, for example aluminium alloys.

Hereafter, the structure of the bottom bracket assembly 1 is described with reference to a preferred assembly method, so as to illustrate the possible pre-assembled sub-assemblies that can be provided in the embodiment of the assembly 1.

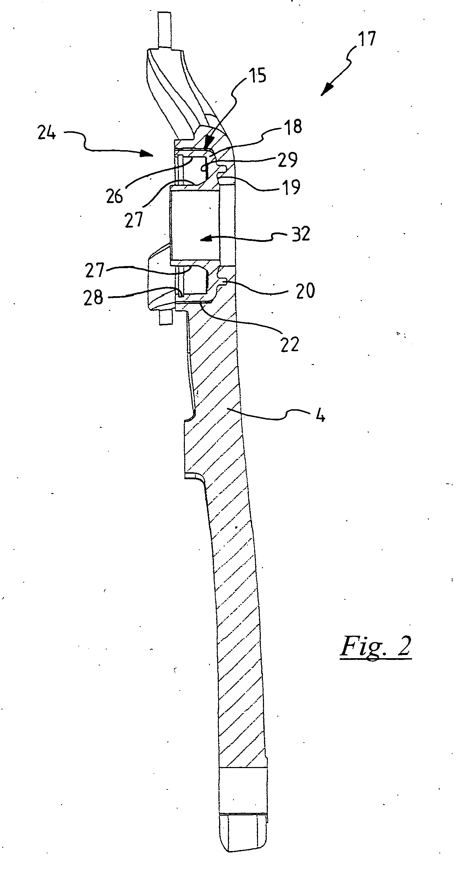

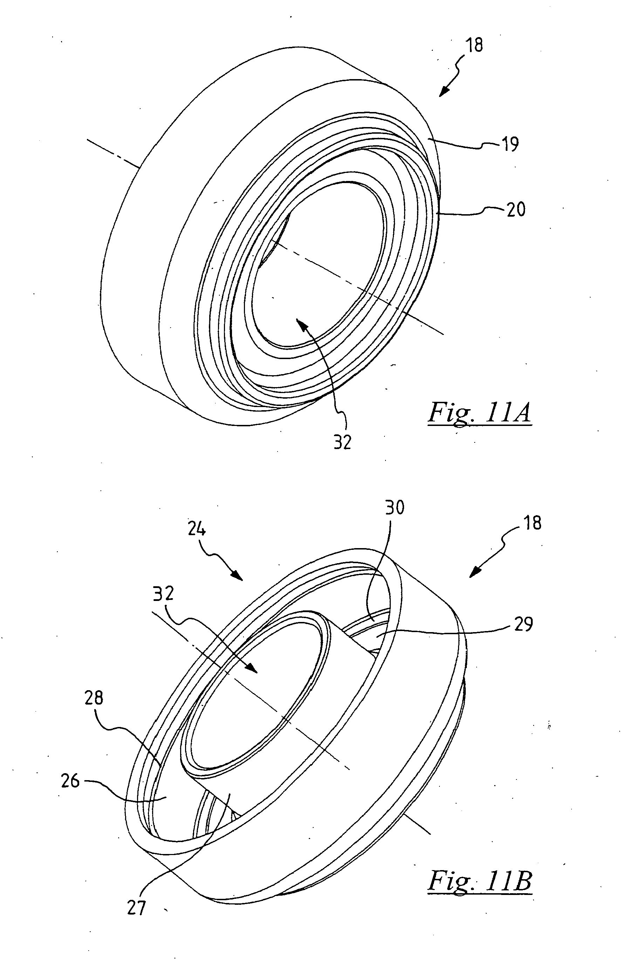

With reference to figure 2, the right crank 4 has an end 17 for coupling with the axle 2 in which a recess 15 is formed where an annular insert 18 is inserted and fixed, as shown in detail in figures 11A and 11 B. The insert 18 is made integral with the crank 4 for example by gluing or co-moulding.

In order to increase the adhesion surface, the insert 18 has - on a wall 19 facing in the axial direction - a projecting annular flange 20 intended to penetrate in a corresponding annular groove 13 formed in the body of the crank 4. In addition or alternatively, it is also possible to provide an outer threading 22 that, like the flange 20, receives the glue for gluing or co-moulding to the composite material.

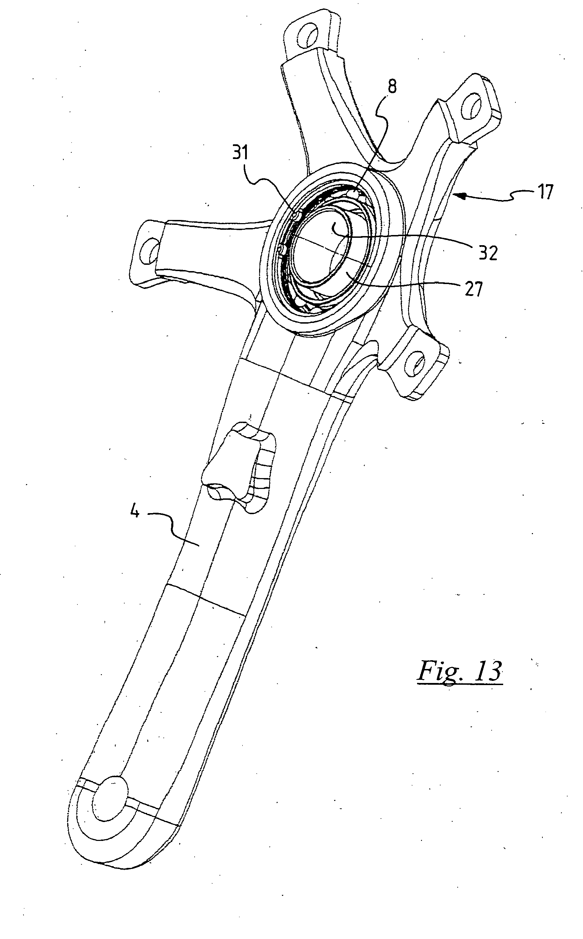

On the side of the insert 18 opposite that of the flange 20 an annular seat 24 for receiving the bearing 8 is formed; the seat 24 comprises a cylindrical surface with a large diameter 26, a cylindrical surface with a small diameter 27 and a bottom surface 29 surrounded by an annular abutment surface 30, slightly raised with respect to the bottom surface 29. The cylindrical surface with a large diameter 26 is adapted to couple with the outer ring of the bearing 8, which also axially abuts against the annular surface 30. A groove 28 for the insertion of a locking ring 31 (represented only in fig. 13) of the bearing 8 is also formed on the outer cylindrical surface 26. Alternatively, the bearing 8 can be inserted in the insert 18 with a coupling with interference between its outer ring and the surface with a large diameter 26.

It should be noted that both the recess 15 and even more so the seat 24 have smaller depths than the thickness of the crank 4.

By coupling with interference between a first element that is inserted in the opening of a second element a coupling is meant that is obtained by making the first element slightly larger in size than the opening of the second element, so that the second element and the first element must be forced both to be able to penetrate one another, and to be able to be disengaged from each other.

The width of the annular seat 24 between the surface with a small diameter 27 and the surface with a large diameter 26 is sufficient to allow the housing of the bearing 8 and of a part of the right adapter support 12. It is also possible to provide that the bearing 8 be co-moulded in the crank 4, by this term meaning that the bearing 8 is pre-positioned in the mould in which the crank 4 is formed.

Alternatively, the seat 24 can be made directly in the body of the crank 4, especially when the crank is metallic.

The seat 24 extends in the crank 4 concentrically about a hole 32 for coupling with the axle 2. The coupling hole 32 has a cylindrical surface, preferably smooth or knurled, to make a coupling with interference such that the crank 4 is integral with the axle 2.

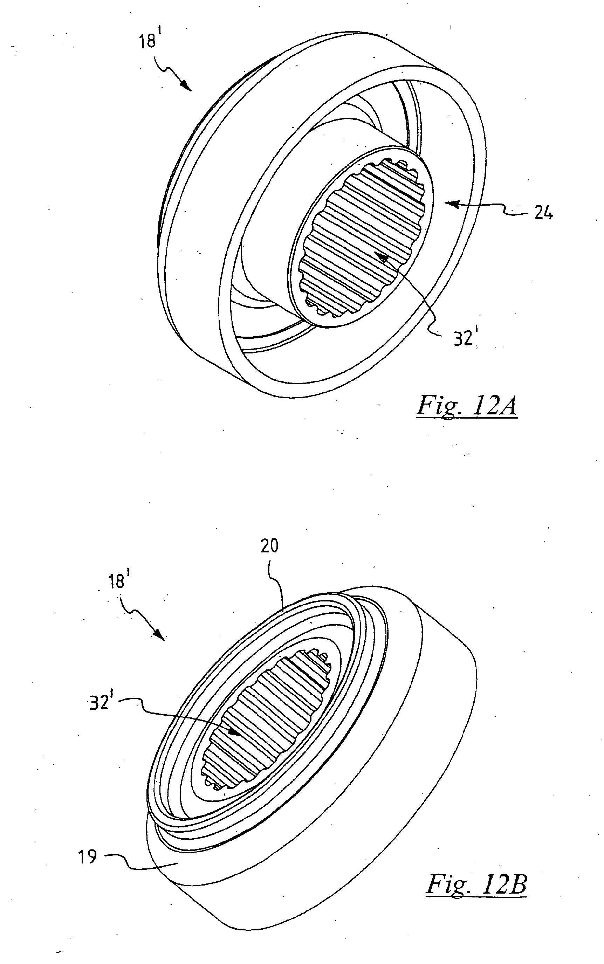

What has been described with reference to the right crank 4 is substantially also valid (mirrored) for the left crank 6, even if it is preferable to use a slightly different insert 18', illustrated in figures 12A and 128. The main difference with respect to the insert 18 is in the hole 32', which is defined by a surface shaped so as to make a shape coupling with the axle 2. In the example shown the profile is grooved. Consequently, the left crank 6 is not described any further in detail.

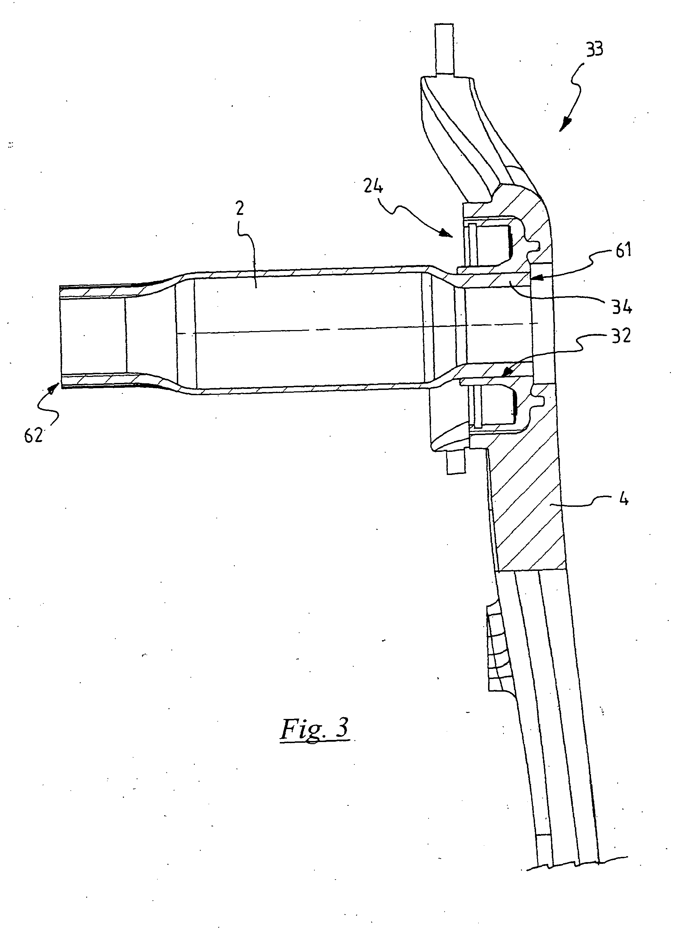

With reference to figure 3, the right crank 4 coupled with the axle 2 forms a right crank assembly 33, which thus constitutes a sub-assembly of the bottom bracket 1. As stated above, the axle 2 and the crank 4 are preferably coupled together with interference, but it is possible to adopt any other type of known coupling, like a shape coupling. The right end 61 of the axle 2 that couples with the right crank 4 has a preferably smooth or knurled cylindrical coupling surface, like the hole 32 of the insert 18.

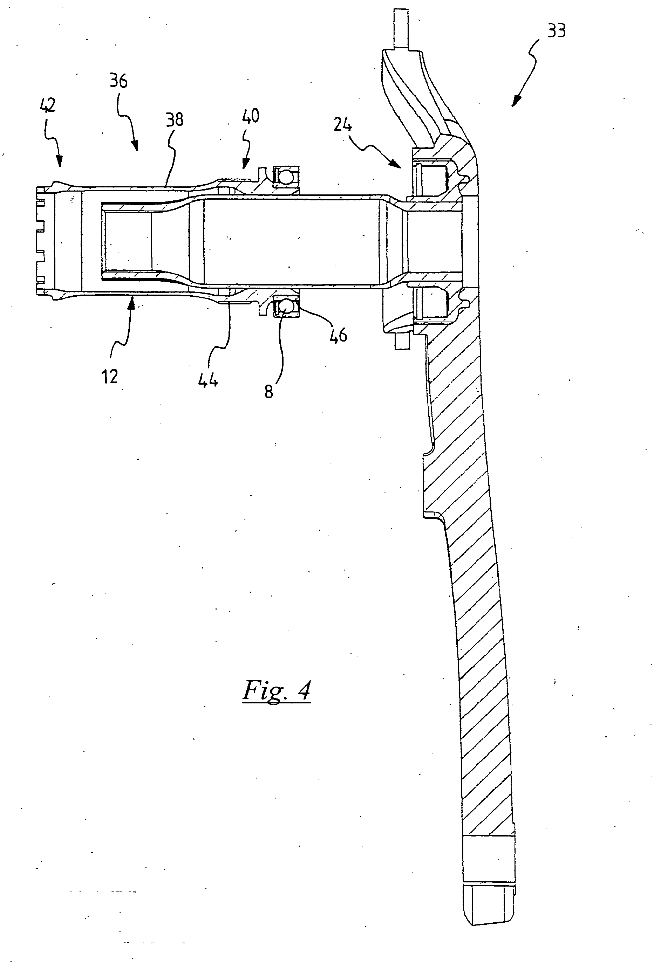

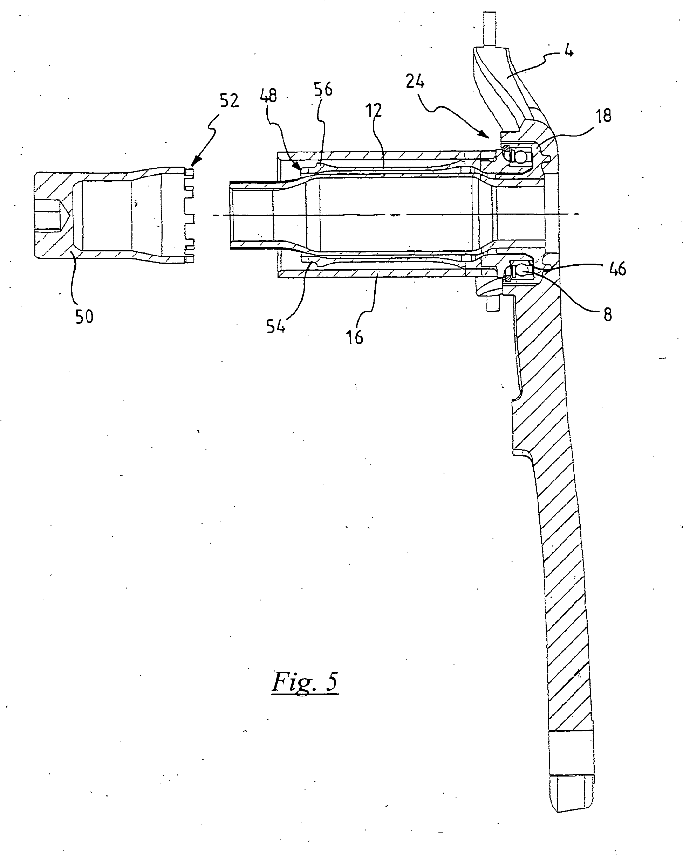

In figure 4 and 5 the coupling step of a right adapter assembly 36 with the crank assembly 33 is illustrated. The right adapter assembly 36 comprises the right adapter support 12 and the bearing 8. It should be noted that both the adapter assembly 36 and the complex formed by the adapter assembly 36 once coupled with the crank assembly 33 constitute sub-assemblies of the bottom bracket 1.

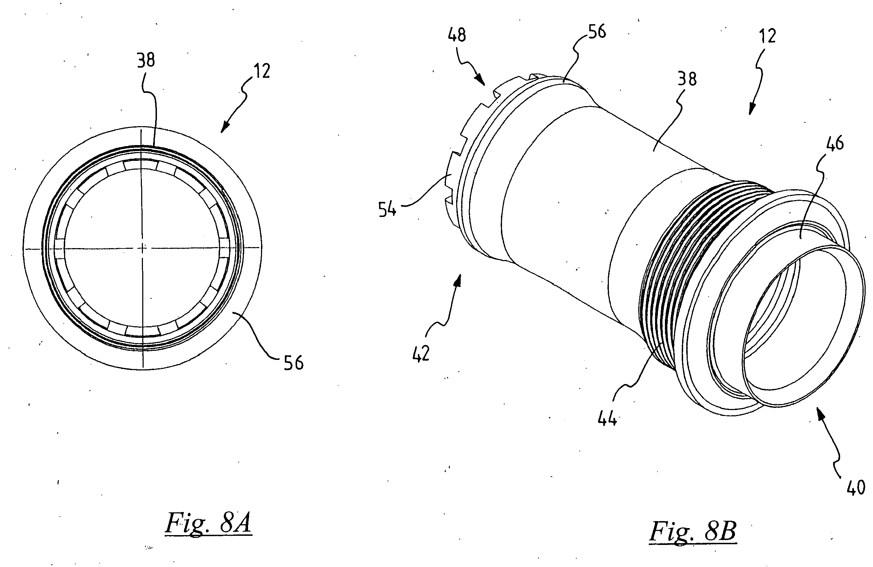

The right adapter support 12, illustrated in greater detail in figures 8A and 8B, comprises a tubular body 38 with a first end 40 and a second end 42. Near to the first end 40, the adapter support 12 comprises both an outer threading 44 formed on the tubular body 38, for the coupling with the box 16 of the frame inside it, and an outer cylindrical seat 46, intended to project canti-levered from the box 16 and to receive the inner ring of the bearing 8. The coupling between the adapter support 12 and the bearing 8, preferably, is with interference. The outer cylindrical seat 46 and the bearing 8 insert into the annular seat 24 of the crank 4 (figure 5).

The illustrated assembly methods (figures 4 and 5) include the provision of a sub-assembly of the bottom bracket that comprises the adapter assembly 36 coupled with the crank assembly 33 already pre-assembled before being mounted to the box 16 of the frame. However, it should be noted that - in the case in which one wished to assemble the adapter support 12 at the box 16 of the frame before the assembly of the bearing 8 and of the crank assembly 33 - the outer cylindrical seat 46 of the adapter support 12 is also accessible after the adapter support 12 has been mounted on the box 16 of the frame.

At the second end 42, the right adapter support 12 is provided with a shaped profile formed by a front toothing 48, for engagement with a drive key 50 (figure 5) on which a matching toothing 52 is made. Thanks to the front toothing 48 and by means of the key 50 the right adapter support 12 can be actuated into rotation through the box 16 of the frame, so as to be able to screw and unscrew the threading 44 in the box 16 itself.

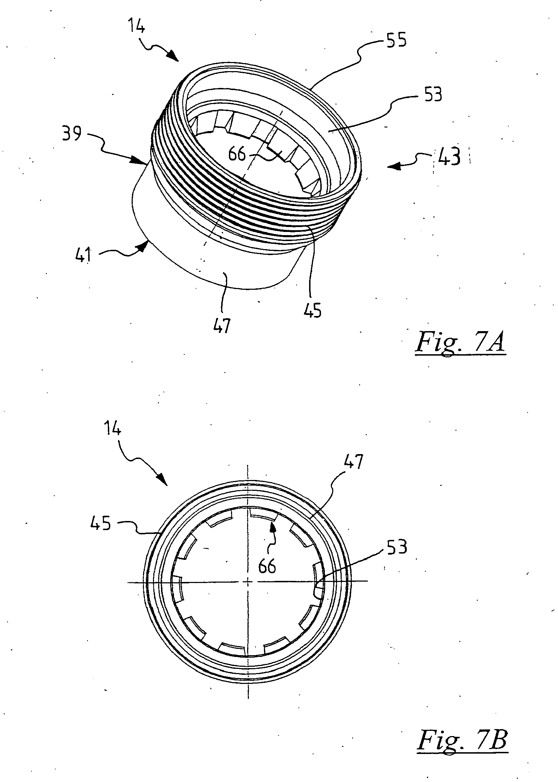

The left adapter support 14, illustrated in greater detail in figures 7A and 7B, comprises a tubular body 39 with a first end 41 and a second end 43. Near to the second end 43, the adapter support 14 comprises an outer threading 45 formed on the tubular body 39, for the coupling with the box 16 of the frame inside it; at the first end 41 the left adapter support 14 comprises an outer cylindrical seat 47, intended to project canti-levered from the box 16 and to receive the inner ring of the bearing 9. The coupling between the adapter support 14 and the bearing 9, preferably, is with interference. The outer cylindrical seat 47 and the bearing 9 insert into an annular seat 24' of the left crank 6 (figure 1), similar to the seat 24 of the right crank 4.

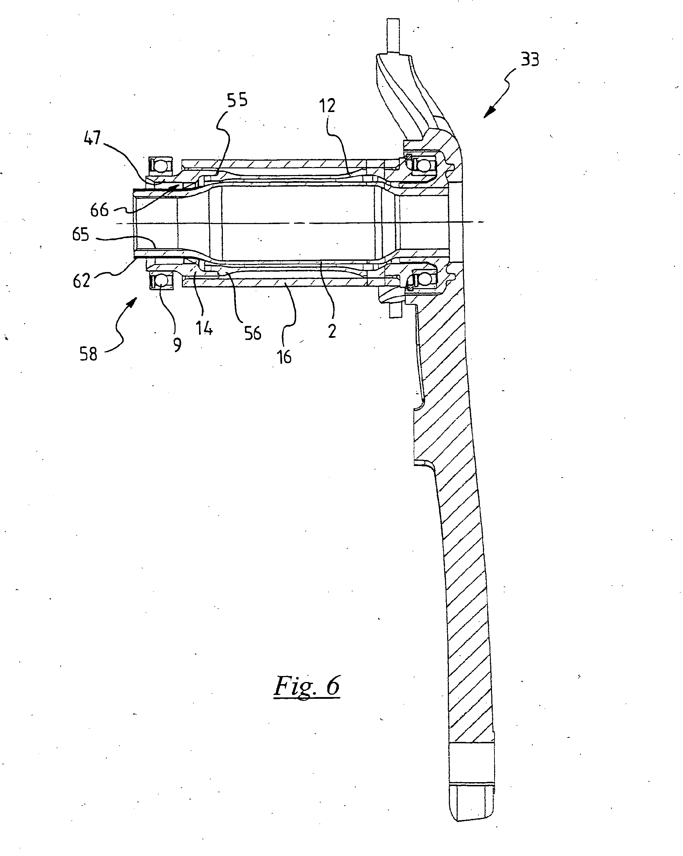

Preferably, in the assembled bottom bracket assembly 1, the body 38 of the right adapter support 12 and the body 39 of the left adapter support are in mutual engagement at the respective second ends 42 and 43. More specifically, the body 38 has a length about equal to that of the box 16 and its portion 54 at the end 42 is inserted in a seat 53 formed at the end 43 in the left adapter support 14; moreover, a shoulder 56 formed on the tubular body 38 abuts against an edge 55 at the end 43 of the tubular body 39 (figure 6). Consequently, the seat 53, the portion 54, the edge 55 and the shoulder 56 constitute coupling means for the adapter supports 12 and 14. Thanks to this coupling, the right adapter support 12 also acts as a spacer, i.e. it determines the distance in the axial sense between the two cranks 4 and 6.

Figure 6 illustrates the insertion of a left adapter assembly 58 into the box 16 of the frame. The left adapter assembly 58 is preassembled with the same methods as the right adapter assembly 36, i.e. with the bearing 9 coupled externally on the cylindrical seat 47 of the left adapter support 14 with interference. The left adapter assembly screws into the box 16 of the frame until it abuts with its edge 55 against the shoulder 56 of the right adapter support 12.

Internally the left adapter support 14 is provided with a toothing 66 that projects radially. The toothing 66 extends on a shorter diameter than that of the front toothing 48 of the right adapter support 12, and it is intended to be engaged by a drive key (not illustrated) similar to the key 50.

The left crank 6 is mounted in the assembly 1 by inserting the left end 62 of the axle 2 in its hole 32', and the bearing 9 and the end 47 of the left adapter support 14 in its annular seat 24'. The left crank 4 is locked against accidental axial withdrawal by a nut 64 screwed onto an inner threading 65 formed in the axle 2. The left end 62 of the axle 2 has a profile matching that of the surface of the hole 32' of the left crank 6, so as to ensure the shape coupling.

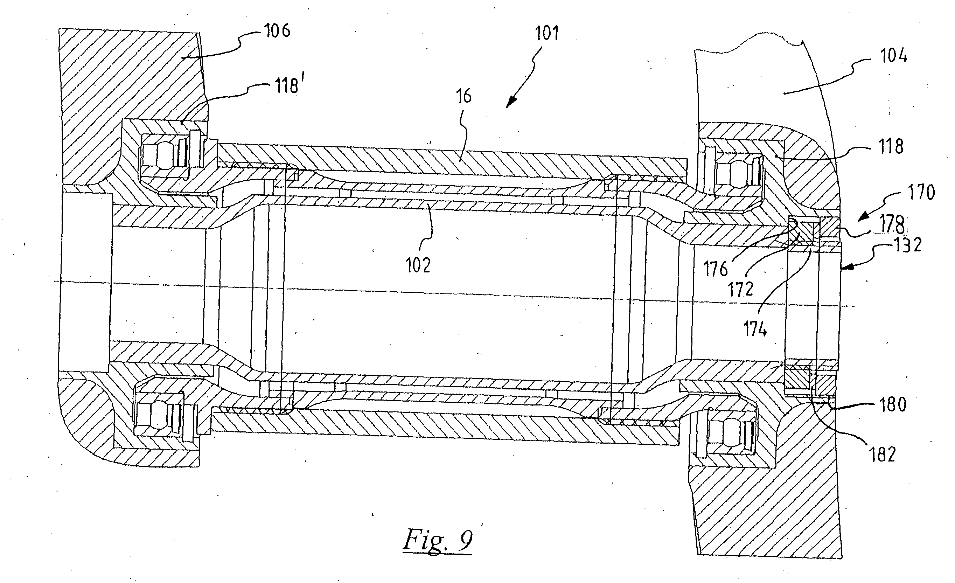

With reference to figure 9, a bottom bracket assembly 101 according to an alternative embodiment of the invention is illustrated. Hereafter the same reference numerals already introduced previously in the description to indicate the same elements of the two assemblies shall be used; elements of the assembly 101 that are analogous but different to elements of the assembly 1 are, on the other hand, indicated by numbers increased by 100 with respect to the numbers of the elements of the assembly 1.

The assembly 101 differs from the assembly 1 in that it has an axle 102 coupled by interference with the left crank 106 and with shape coupling with the right crank 104. The right crank 104 is kept in position through an adjustment system 170 of the chain line.

The adjustment system 170 is a variant of the one object of European patent application 05425454.5 to the same Applicant. In particular, a first ring nut 172 with internal threading is screwed into a threaded tang 174, which projects application 05425454.5 to the same Applicant. In particular, a first ring nut 172 with internal threading is screwed into a threaded tang 174, which projects axially from the axle 2, and abuts against a step 176 inside the hole 132 of the insert 118. The first ring nut 172 prevents the accidental axial withdrawal of the right crank 104, which could nevertheless still move axially towards the inside of the assembly 101. In order to also prevent this second movement, a second ring nut 178 with outer threading is screwed into a threading 180 inside the hole 132 of the insert 118 and abuts upon the first ring nut 172. Between the first and the second ring nut 172 and 178 a washer 182 of predetermined thickness according to the chain line that one wishes to obtain is arranged.

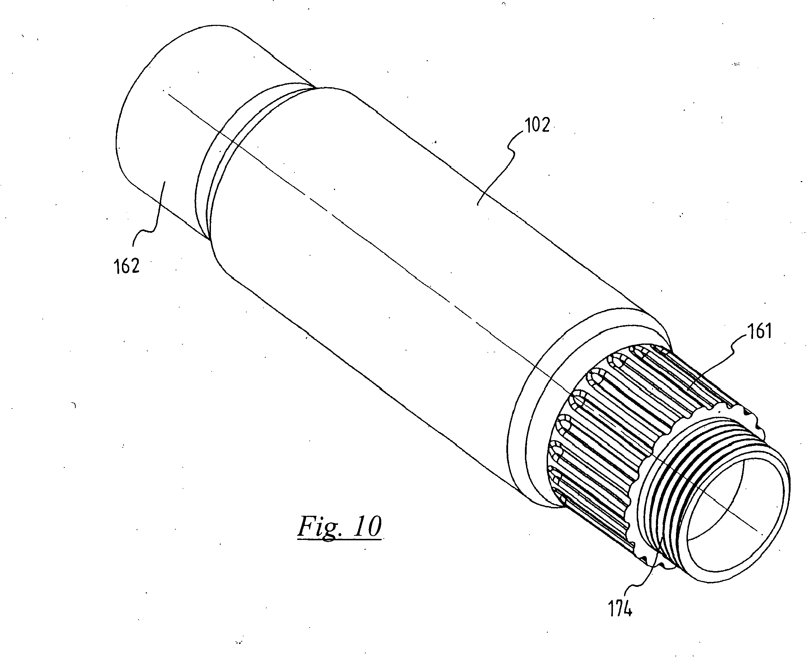

The axle 102 is illustrated in greater detail in figure 10 and has the right end 161 grooved with the same profile as that object of European patent application 05425377.8, to the same Applicant and also reproduced on the left end 62 of the axle 2 of the assembly 1. The threaded tang 174 projects axially at the right end 161. The left end 162 has a smooth or knurled outer cylindrical surface to couple with interference with the left crank 106.

It is clear to the man skilled in the art that the couplings for the transmission of torque between cranks and axle can be different to those illustrated. For example, both the axle 2 and the axle 102 can have the ends 61 and 162 shaped with a grooved profile like that of the opposite ends 62 and 161, or else vice-versa the ends 62 and 161 can be coupled by interference like the opposite ends 61 and 162; furthermore, the ends 61, 62, 161 or 162 can be shaped according to polygonal profiles, *per se* known in the field.

## Claims

1. Bottom bracket assembly of a bicycle, comprising two cranks (4, 6; 104, 106), an axle (2; 102) integral in rotation with the cranks (4, 6; 104, 106) and two bearings (8, 9) for the rotatable support of the assembly (1; 101) with respect to a box (16) of the frame of the bicycle, **characterised in that** at least one of the bearings (8, 9) is arranged inside the thickness of one of the cranks (4, 6; 104, 106).

2. Assembly according to claim 1, comprising at said crank (4, 6; 104, 106) an adapter support (12, 14) fixed integrally canti-levered to the box (16) of the frame, in which the bearing (8, 9) is arranged between said crank (4, 6; 104, 106) and said adapter support (12, 14).

3. Assembly according to claim 2, in which the bearing (8, 9) is mounted externally about said adapter support (12, 14).

4. Assembly according to claim 3, in which said crank (4, 6; 104, 106) comprises a receiving seat (24, 24') of the bearing (8, 9), with an inner cylindrical coupling surface (26) with the bearing (8, 9).

5. Assembly according to claim 4, in which the receiving seat (24, 24') of the bearing (8, 9) is formed in an insert (18, 18'; 918, 118'), inserted integrally in a recess (15) formed in the crank (4, 6; 104, 106).

6. Assembly according to claim 4, in which the receiving seat (24, 24') has a smaller depth than the thickness of the crank (4, 6; 104, 106).

7. Assembly according to claim 5, in which the recess (15) has a smaller depth than the thickness of the crank (4, 6; 104, 106).

8. Assembly according to any one of claims 1 to 7, in which both of the bearings (8, 9) are arranged inside the thickness of one of the respective cranks (4, 6; 104, 106).

9. Assembly according to claim 2, in which the adapter support (12, 14) extends inside the box (16) of the frame until it couples with another adapter support (12, 14) provided at the opposite crank (4, 6; 104, 106).

10. Assembly according to claim 9, in which the two adapter supports (12, 14) comprise mutual coupling means (53, 54, 55, 56).

11. Method for assembling an assembly (1; 101) according to any one of claims 1 to 10, comprising the provision of a sub-assembly (36) that includes one (12) of the adapter supports and one (8) of the bearings mounted on the adapter support (12).

12. Method for assembling an assembly (1; 101) according to any one of claims 1 to 10, comprising the arrangement of a sub-assembly (33) that includes one (4; 104) of the cranks and one (8) of the bearings mounted in the crank (4; 104).

13. Method according to claim 12, in which the sub-assembly (33) also includes the axle (2; 102), integrally coupled with the crank (4; 104).

14. Method according to claim 13, in which the sub-assembly (33) also includes one (12) of the adapter supports, mounted in the bearing (8).

15. Sub-assembly for assembling an assembly (1; 101) according to any one of claims 1 to 10, including one (12) of the adapter supports and one (8) of the bearings mounted on the adapter support (12).

16. Sub-assembly for assembling an assembly according to any one of claims 1 to 10, including one (4; 104) of the cranks and one (8) of the bearings mounted in the crank (4; 104).

17. Sub-assembly according to claim 16, also including the axle (2; 102), integrally coupled with the crank (4; 104).

18. Sub-assembly according to claim 17, also including one (12) of the adapter supports, mounted in the bearing (8).

19. Adapter support suitable for being mounted on a box (16) of the frame of a bicycle for the support of a bearing (8, 9) of a bottom bracket assembly (1, 101), comprising a tubular body (38, 39) provided with an outer threading (44, 45) for the engagement with the box (16) of the frame inside it and a receiving seat (46, 47) of the bearing (8, 9), **characterised in that** the receiving seat (46, 47) of the bearing (8, 9) is an outer cylindrical seat.

20. Adapter support according to claim 19, in which the outer cylindrical seat (46, 47) for receiving the bearing (8, 9) is accessible even with the adapter support (12, 14) mounted on the box (16) of the frame.

21. Adapter support according to claim 19, comprising - at an opposite side to the receiving seat (46, 47) of the bearing (8, 9) - coupling means (53, 55; 54, 56) suitable for engaging the adapter support (12) with another adapter support (14), mounted in the same bottom bracket assembly (1; 101).

22. Adapter support according to claim 19, comprising a shaped drive profile (48, 66) for the actuation of the adapter support (12, 14) through the box (16) of the frame.

23. Crank for a bottom bracket assembly of a bicycle, comprising in its thickness a receiving seat (24, 24') of a bearing (8, 9) for the rotatable support of the assembly (1; 101) with respect to a box (16) of the frame of the bicycle, said receiving seat having an inner cylindrical coupling surface (26) with the bearing (8, 9).

24. Crank according to claim 23, in which the receiving seat (24, 24') of the bearing (8, 9) is formed in an insert (18, 18'; 118, 118'), inserted integrally in a recess (15) formed in the crank (4, 6; 104, 106).

25. Crank according to claim 23, in which the receiving seat (24, 24') is less deep than the thickness of the crank (4, 6; 104, 106).

26. Crank according to claim 24, in which the recess (15) is less deep than the thickness of the crank (4, 6; 104, 106).

27. Crank according to claim 23, in which the receiving seat (24, 24') comprises a bottom surface (29) surrounded by an annular abutment surface (30), slightly raised with respect to the bottom surface (29).
